# EUROPEAN PATENT APPLICATION

(11) **EP 4 635 673 A1**
(43) Date of publication of application: **22.10.2025**
(21) Application number: 24170967.4
(22) Date of filing: 18.04.2024
(51) Int. Cl.: B23K 26/38, B23K 26/70, B23K 37/00

(54) **PROTECTION DEVICE, LASER CUTTING HEAD ASSEMBLY AND LASER CUTTING MACHINE**

(71) Applicant: Bystronic Laser AG, 3362 Niederönz (CH)
(72) Inventor: SCHÄRER, Philipp, 3367 Thörigen (CH)
(74) Representative: Frei Patent Attorneys

(57) **Abstract**

A protection device for a laser cutting head (10) comprises an electrode device (30) that is shaped to extend around a periphery of a fore part of the laser cutting head, and an electrode mount (43) for mounting the electrode device relative to the laser cutting head. The electrode device has a plurality of electrodes (33, 34, 35, 36) electrically insulated from each other, each one of the electrodes constituting an electrode device segment by being arranged to extend around a fore part segment of the periphery of the fore part. The electrodes (33, 34, 35, 36) are spaced from the fore part and electrically insulated therefrom. The protection device further comprises a detecting device (50) for detecting whether one of the electrodes (33, 34, 35, 36) has collided with an object by measuring an electrical property of the electrode device. Since the electrode device has a plurality of electrodes (33, 34, 35, 36), it is possible to not only detect that an obstacle is present but also to detect its location relative to the laser cutting head (10).

## Description

The invention is in the field of laser cutting machines, especially flatbed laser cutting machines. More in particular, it relates to a protection device, for a laser cutting head, a laser cutting head assembly having a protection device, and to a laser cutting machine, in particular flatbed laser cutting machine, having a laser cutting head carrying a protection device.

In laser cutting machines, in particular flatbed laser cutting machines, a laser cutting head moves relative to a workpiece placed on a workpiece support. At locations where a cut is to be made, the laser cutting head emits laser radiation towards the workpiece and often also ejects a jet of an assist gas. After the desired parts have been cut out of the workpiece - which for example may be a metallic plate - they lie flat on the workpiece support until they are removed, usually after an entire cutting process that may involve cutting out a large number of parts.

It may, however, happen that a cut-out part instead of lying flat tilts on the workpiece support, for example because of the assist gas jet. This may especially happen if the workpiece support forms a grid of support spots on which the workpiece lies and if the cut-out part in at least one horizontal dimension does not extend over a large number of such support spots, i.e. if the cut-out part is small or narrow.

The laser cutting head will usually move close to the upper surface of the workpiece supported by the workpiece support, both, during the cutting process, when the laser radiation in emitted, and when moving from one cutting location to another cutting location. When a tilted part - or other obstacle - is on the surface of the workpiece support, then this may result in a collision that may damage the laser cutting head, especially a nozzle of the laser cutting head, which nozzle forms the foremost part of the laser cutting head. Additionally, even if in the event of such a collision only the nozzle is torn off, the body of the laser cutting head itself may be affected, too, due to the substantial forces acting during the collision.

To avoid such collisions, the prior art on the one hand suggests a so-called tilt prevention function. Such function is a relatively sophisticated tool that should ensure that the cut-out parts are arranged on the workpiece support in a manner that tilting is unlikely. However, such tilt prevention function requires sophisticated programming,. On the other hand, the prior art suggests a protection device that is arranged around the laser cutting head and is made of comparably inexpensive material. In the event of a crash, it is the protection device that is damaged instead of the more expensive components of the laser cutting head. CN 212470214 U discloses an example of such a protection device, in which a first circular ring around the foremost tip of the laser cutting head is deformed when a collision takes place. This deformation causes the ring to touch a detection arm so as to trigger alarming. CN 212470214 U also mentions using the circular ring for detecting an obstacle by sensing the capacity. Capacity measurements are delicate and hence of limited reliability. Also, the only way to react to a collision or potential collision is to stop the system. Especially given the considerable likelihood of false obstacle detections, this is not satisfactory.

It is an object of the present invention to provide a protection device overcoming disadvantages of prior art protection devices. The protection device should be suitable of preventing collisions of the laser cutting head with an object so that no damages occur and that the cutting process can be continued without the necessity to exchange parts of the laser cutting head. It is also an object of the present invention to provide a laser cutting head assembly and a laser cutting machine.

According to an aspect of the invention, a protection device for a laser cutting head of a laser cutting machine is provided. The laser cutting head for which the protection device works is of the kind being equipped to emit laser radiation towards a workpiece supported by a workpiece support and to move relative to the workpiece support. The protection device comprises an electrode device that is shaped to extend around a periphery of a fore part of the laser cutting head, and an electrode mount for mounting the electrode device relative to the laser cutting head. The electrode device has a plurality of electrodes - for example at least four electrodes, or also at least six, or at least eight electrodes - electrically insulated from each other, each one of the electrodes constituting an electrode device segment by being arranged to extend around a fore part segment of the periphery of the fore part. The electrodes are spaced from the fore part and electrically insulated therefrom, too. The protection device further comprises a detecting device for detecting whether one of the electrodes has collided with an object by measuring an electrical property of the electrode device.

By the electrode device having a plurality of electrodes, each next to a fore part segment, the protection device has the substantial advantage that it is possible to not only detect that an obstacle is present but also to detect its location relative to the laser cutting head. This makes possible that the laser cutting process is continued after the prevented collision between the laser cutting head and the object and the object to be removed or placed at a location where it does not interfere with the cutting process at a later, appropriate time.

For example, if the contact between the electrode device and the object has occurred during a movement of the laser cutting head without any laser radiation emission (i.e. during a movement of the laser cutting head from one cutting location to another cutting location), then the laser cutting head may for example just take on another path for this movement, namely a path around the obstacle, and the cutting process may be finished without any further interruption, the protection device ensuring at any time, and independent on the extension of the object, that the laser cutting head does not collide.

In a group of embodiments, the detecting device is equipped to detect whether the electrode device is in electrical contact with the workpiece support, whereby the electrical property of the electrode device is an electrical resistance. To this end, the electrodes of the electrode device are subject to a small voltage. The detecting device detects when this voltage breaks down (due to a high internal resistance of the unit that supplies this voltage) and/or when a current flows into the respective electrode. Either way, the electrical property ultimately measured is an electrical resistance.

In this group of embodiments, the protection device works only if the cut workpiece is electrically conducting, since the conductivity between the electrode device and the workpiece support is because of a conducting path via the - tilted - part of the workpiece that causes the collision. The requirement of the workpiece to be electrically conducting, however, is not a severe restriction, since the overwhelming majority of laser cutting machines are laser cutting machines for cutting metallic workpieces.

Measuring a resistance has substantial advantages. Firstly, a resistance measurement is very reliable: as soon as there is some conductivity between the electrode device (i.e., one of the electrodes) and the workpiece support or ground, this is an unambiguous indication of there being a physical contact. Also, there exist devices that can detect such changes in the electrical resistance very quickly, so that it is possible to immediately stop also fast movements of the laser cutting head before the laser cutting head itself collides with the object. Secondly, resistance measurements can be made without the necessity of any substantial deformation, especially plastic deformation, of the electrode device so that even after a collision between the protection device and the object (being a prevented collision between the laser cutting head and the object), the cutting process may continue without the protection device having to be exchanged.

The principle of the protection device being equipped to measure an electrical resistance between the electrode device on the one hand and the workpiece support on the other hand has advantages independent of the existence of a plurality of electrodes, each for a segment of the periphery of the fore part of the laser cutting head. Rather, it may be implemented also if the electrode device has a single electrode only, for example extending circularly around the periphery of the fore part. In this case, the software of the laser cutting machine may for example be programmed to deduct a location of the object relative to the laser cutting head from the direction of travel of the laser cutting head in the moment of the detection of the electrical contact. While this approach might require an a bit more sophisticated programming and interaction between different software modules, it may in embodiments be an alternative.

Thus, the invention also concerns a protection device for a laser cutting head of a laser cutting machine of the described kind, wherein the protection device comprises an electrode device that is shaped to extend around a periphery of a fore part of the laser cutting head, and an electrode mount for mounting the electrode device relative to the laser cutting head, wherein the protection device further comprises a detecting device for detecting whether the electrode device has collided with an object by measuring an electrical property of the electrode device, and the detecting device being equipped to do so by detecting whether the electrode device is in electrical contact with the workpiece support.

Especially, the detecting device may be equipped to detect which one of the electrodes is in electrical contact with the workpiece support. To this end, the protection device is wired in such a way that there is an electrical connection (especially a wire) between the protection device and each one of the electrodes - so as to detect which one of the electrodes is affected by the collision.

As an alternative to detecting whether at least one of the electrodes of the electrode device is in electrical contact with the workpiece support, the protection device could also be equipped to measure a different property that depends on a collision of one of the electrodes with an object. For example, the protection device could comprise an inner conducting structure at a small distance to the electrodes. The detecting device could then measure whether one of the electrodes (and which one of the electrodes) is in contact with the inner conducting structure, accounting for the fact that a deformation of the electrode, caused by a collision, is needed for the electrode to be displaced towards inwardly and to get into contact with the inner conducting structure. A further alternative set-up would be to use a switch activated by an upper portion of the respective electrodes. As soon as the electrode touches the object and is thereby displaced relative to the laser cutting head, the respective switch is activated. These alternative set-ups make a somewhat more complicated construction necessary, however, they do not depend on the workpiece being electrically conducting.

The electrode mount that mounts the electrode device to the laser cutting head may comprise a plurality of attachment elements to hold the electrodes. The attachment elements are securable or secured to the laser cutting head in any suitable way. For example, the attachment elements may be securable to the laser cutting head by being present on a rack that itself may be mounted to the laser cutting head in a suitable manner, by screwing, engaging in a restriction, etc.; depending on the geometry of the laser cutting head. In another example, the attachment elements may be permanently attached to the laser cutting head by an adhesive connection, a positive-fit connection and/or similar.

The attachment elements may be electrically insulating, so as to electrically insulate the electrodes from a possibly electrically conducting surface of the laser cutting head and/or from each other.

In an example, every one of the electrodes may comprise one or two of the attachment elements, thus each electrode may be held by its dedicated attachment element(s). In another example, the attachment elements may be arranged between the electrodes, meaning that each attachment element is involved in carrying two neighbouring ones of the electrodes.

In embodiments, the attachment elements may comprise an elastomeric material. Thereby, shock on the protection device caused by a collision may be effectively absorbed to protect the laser cutting head.

The electrodes extend around a fore part of the laser cutting head and may for example have a portion extending in a plane approximately parallel to the workpiece and going through the lower end of the laser cutting head (i.e. the extend in the plane through the "tip" of the laser cutting head) or possibly even slightly below this plane. For example, the electrodes each may have an arc shaped portion extending around the respective segment of the periphery of the foremost part of the laser cutting head, for example around the foremost part of its nozzle.

In addition to a lower portion with a curved electrode segment (for example an arc shaped portion as mentioned), the electrodes may comprise an upper portion that is connected to the electrode mount (i.e., if applicable, the attachment elements), and a connecting portion connecting the lower portion and the upper portion.

In a group of embodiments, the protection device further comprises a deflection mechanism for deflecting the electrodes relative to the laser cutting head, especially for deflecting a lower portion of the described kind radially with respect to an axis of the laser cutting head (the axis usually being a vertical axis, often parallel to the direction in which the laser radiation is emitted). Such deflection mechanism may allow an adaptation to different diameters of the lower part of the laser cutting head, for example to different nozzles. In addition or as an alternative, it may be used for adaptation to different laser cutting machine types and different cutting velocities, so as to ensure that there is always enough time for stopping a movement of the laser cutting head upon detecting a contact with an object and before the laser cutting head itself collides.

The invention also concerns a laser cutting head assembly of a laser cutting head and a protection device, as described in the present text, mounted in a manner that the electrode device extends around a foremost part, as described in the present text.

A fore part of the laser cutting head may comprise a nozzle around which the electrode assembly extends. Such nozzle may or example be of the kind emitting, in addition to the laser radiation, also an assist gas towards the surface of the workpiece.

In embodiments, the laser cutting head may comprise a camera directed towards the workpiece. Upon detection of an obstacle (an object that has been sensed by the electrode device), the image recorded by the camera may be used to capture a 2D-extension of the obstacle, so that the laser cutting head during the remaining process may go around the obstacle.

In addition to concerning the protection device and the laser cutting head assembly, the invention also concerns a laser cutting machine with a laser cutting head, together with the protection device. In this laser cutting machine, the detecting device is communicatively coupled with the machine control of the laser cutting machine so that the machine control may stop and/or deflect a movement of the laser cutting head once a contact between the electrode device and an object has been detected.

In this, the detection device may be a separate, dedicated device with a communication interface to the machine control. Alternatively, it may be, at least partially, integrated in the machine control. The machine control may be programmed to deduct a location of the object from the information which one of the electrodes has been in contact with the object and possibly to prevent the laser cutting head to moving to where the object has been located - for example until a confirmation has been given that the object has been removed.

Hereinafter, embodiments of the present invention are described in more detail referring to drawings. In the drawings, same reference numbers refer to same or similar components. The drawings are schematical. They show:
- Fig. 1:: a flatbed laser cutting machine;
- Fig. 2: a fore portion of a laser cutting head with, with a protection device;
- Fig. 3: a bottom view of a protection device;
- Fig. 4: a bottom view of an alternative protection device;
- Fig. 5: an attachment element; and
- Fig. 6: fore portion of a laser cutting head with, with am alternative protection device.

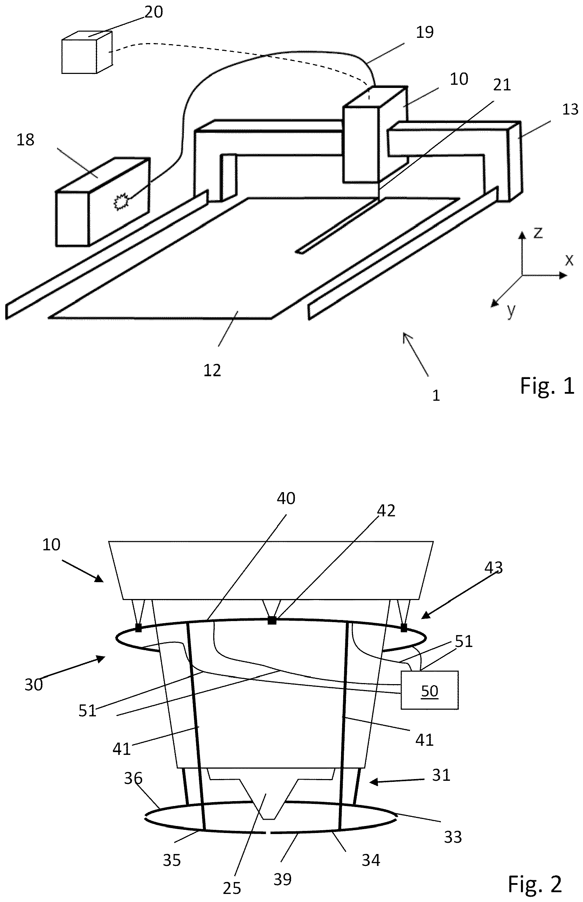

**Figure 1** shows an example of a laser cutting machine 1. The machine comprises a laser source 18 and a transport fiber 19, a laser cutting head 10, and a laser head moving mechanism. A workpiece 12 is supported by a workpiece support. The laser cutting head moving mechanism comprises a bridge 13 relative to which the laser cutting head 10 is movable in a first horizontal dimension (x dimension), and which itself is movable, for example on a pair or rails, in a second horizontal dimension (y dimension) relative to the workpiece support and the workpiece 12. The laser cutting head 10 may optionally in addition be movable in a vertical dimension (z dimension) towards and away from the workpiece support. The workpiece 12 may be a metal sheet that is cut by a laser beam emitted by the laser cutting head 10. The processing laser beam 21 emitted by the laser cutting head 10 will generally propagate into a vertical downward (-z)-Direction. Fig. 1 also illustrates a machine control 20 that controls among other things, the movement of the laser cutting head relative to the workpiece support.

In many embodiments, the workpiece support will comprise a plurality of grate elements that define an array of support spots where a generally flat workpiece 12 lies on the workpiece support. For example, the grate elements may have the shape of plates that lie vertically and have a jagged upper edge so that the tips of the jags form the support spots. When the laser cutting machine 1 cuts pieces out of the workpiece 12, it may happen that the pieces, also under the influence of the flow of an assist gas being blown out of a nozzle at the lower end of the workpiece 12, are tilted. When the laser cutting head 10, which in many embodiments moves close to the upper surface of the workpiece 12, moves towards a tilted piece, this may result in a collision resulting in a damage, especially of the laser cutting head 10, followed by an interruption of the cutting process.

To avoid such collisions, the laser cutting head 10 is provided with a protection device 30 as illustrated in **Figure 2.** Fig. 2 shows a fore portion of an embodiment of the laser cutting head 10 comprising, as its foremost part, a nozzle 25 from which the laser beam is emitted. In many embodiments the nozzle is further equipped to eject an assist gas, such as Nitrogen gas, air or Oxygen gas.

In this embodiment, the protection device 30 comprises an electrode device 31 with four electrodes 33, 34, 35, 36. Each one of the electrodes has a lower portion 39 that is arc shaped end extends around the nozzle, in a plane approximately corresponding to the plane parallel to the workpiece and through the lower (foremost) end of the nozzle 25. In the depicted embodiment, each one of the electrodes' lower portions 39 constitutes an arc of a little less than 90°, with a small gap between neighboring electrodes. The electrodes further comprise an upper portion 40 mounted to the laser cutting head and a connecting portion 41 that holds the lower portion 39. The electrode mount 43 that mounts the electrodes 33, 34, 35, 36 to the laser cutting head 10 comprises a plurality of electrically insulating attachment elements 42. Each attachment element is held by the laser cutting head by a suitable fixation mechanism. In the depicted embodiment, the attachment elements 42 are arranged between the upper portions 40 of the electrodes 33, 34, 35, 36, holding the two electrodes adjacent to them and at the same time insulating them from each other.

The protection device 30 further comprises a detecting device 50 for detecting whether one of the electrodes 33, 34, 35, 36 has collided with an object. The detecting device 50 is connected, by wires 51, to each one of the electrodes 33, 34, 35, 36. It is further connected to the workpiece support and/or to ground. Because the electrodes 33, 34, 35, 36 are electrically insulated from each other and from the laser cutting head to which they are mounted, the electrical conductivity between the electrodes 33, 34, 35, 36 and the workpiece support and/or ground is essentially zero, i.e. the electrical resistance is very high, close to infinity. However, when one of the electrodes physically touches an electrically conducting object on the workpiece support, the electrical resistance between this electrode and the workpiece support/ground will become low. The detecting device 50 may for example be equipped to apply a small voltage with respect to ground to the electrodes 33, 34, 35, 36and to detect when the voltage (for example due to a high internal resistance of the output to which the voltage is applied) breaks down, or when a current flows through the electrode due to the physical contact with the object.

The detecting device 50 may in embodiments comprise an entity separate from the machine control 20, for example a dedicated integrated circuit (IC) that applies the small voltage and detects whether the voltage breaks down and/or a current flows through one - or more than one - of the electrodes 33, 34, 35, 36. Then, this separate entity is equipped to be in communicative connection with the machine control 20 of the laser cutting machine 1 to send a signal to the laser cutting machine 1 signalling that a collision has taken place and also signalling which one(s) of the electrodes 33, 34, 35, 36 is/are affected by the collision. In alternative embodiments, the detecting device 50 may be integrated in the machine control 20, i.e., the wires 50 directly connect to the machine control 20. Hybrid solutions, are possible also. In any case, the machine control will be programmed to immediately stop a movement of the laser cutting head in the direction of the electrode affected by the collision.

For example, the machine control 20 may be programmed to entirely stop the movement of the laser cutting head 10 and, if applicable, the laser beam and the assist gas supply, and to send out an alarm to the operator asking him/her to remove or properly place the object with which the collision has occurred. Alternatively, the machine control 20may be programmed to continue the process avoiding the position of the object so that the time until the operator arrives may be used.

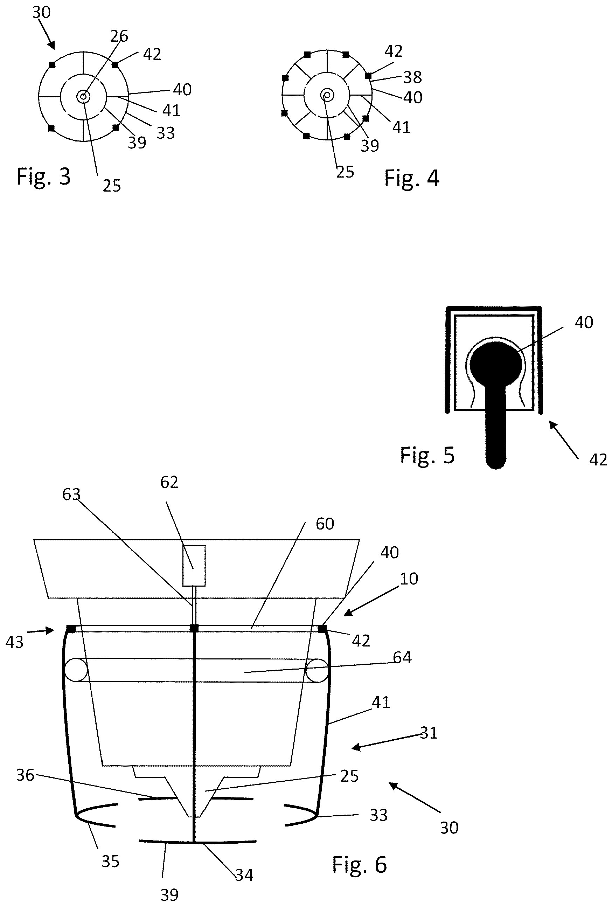

**Figure 3** shows - again schematically - a view of the protection device 30 and the nozzle 25 with a nozzle outlet 26 from below. **Figure 4****,** showing a variant, illustrates the possibility that instead of four electrodes 33, 34, 35, 36, each extending over almost 90°, a different number of electrodes may be used. In Fig. 4, the protection device 30 comprises eight electrodes 38, each extending over almost 45°.

**Figure 5** illustrates the possibility that the attachment elements 42 can be equipped for a snap-in connection with the upper portion 40 of the respective electrode. The upper portion 40 in this may be of the kind illustrated in Fig. 2 or alternatively may be constituted by a knob extension of the connecting portion 41. In any case, a snap-in connection or other reversibly releasable connection between the attachment elements and the respective electrodes or between the attachment elements 42 and a fastening structure of the laser cutting head allows for a quick replacement of the electrode device 31 that may generally be a relatively inexpensive part, made up of dimensionally stable wires or similar.

**Figure 6** yet schematically depicts the possibility to configure the protection device 30 so that the diameter of the electrode device 31 around the fore part can be dynamically adjusted. To this end, in the depicted embodiment the protection device 30 comprises an upper attachment ring 60 and a lower deflection ring 64, both physically coupled to the electrodes 33, 34, 35, 36. In Fig. 6, attachment ring 60 comprises the attachment elements 42, whereas the deflection ring 64 is physically coupled to the connecting portion 41. The relative position of the attachment ring 60 and the deflection ring 64 can be adjusted, leading to an adjustment of the diameter of the lower portion of the electrode device 31, essentially by adjustment of the distances between the lower portions 39 of opposing ones of the electrodes 33, 34, 35, 36. In the depicted embodiment, it is the attachment ring 60 the position of which can be changed by means of a small motor 62 cooperating with a connecting rod 63 coupled to the attachment ring 60. The motor 62 may be controlled directly or indirectly by the machine control 20.

## Claims

1. A protection device (30) for a laser cutting head (10) of a laser cutting machine (1), the laser cutting head (10) being equipped to emit laser radiation towards a workpiece (12) supported by a workpiece support and to move relative to the workpiece support, the protection device comprising an electrode device (31) shaped to extend around a periphery of a fore part of the laser cutting head (10), and an electrode mount (43) for mounting the electrode device (31) relative to the laser cutting head (10), the electrode device (31) comprising a plurality of electrodes (33, 34, 35, 36; 38) electrically insulated from each other, each one of the electrodes (33, 34, 35, 36; 38) arranged to extend around a fore part segment of the periphery of the fore part, and spaced from the fore part, the protection device (30) further comprising a detecting device (50) for detecting whether one of the electrodes (33, 34, 35, 36; 38) has collided with an object by measuring an electrical property of the electrode device (31).

2. The protection device according to claim 1, wherein the detecting device (50) is equipped to detect whether the electrode device (31) is in electrical contact with the workpiece support, whereby the electrical property of the electrode device (31) is an electrical resistance.

3. The protection device according to claim 2, wherein the detecting device (50) is equipped to detect which one of the electrodes (33, 34, 35, 36; 38) is in electrical contact with the workpiece support.

4. The protection device according to any one of the previous claims, wherein the electrode mount (43) comprises a plurality of attachment elements (42), each one of the electrodes (33, 34, 35, 36; 38) being held by at least one of the attachment elements (42) relative to the laser cutting head (10) and/or relative to another one of the electrodes (33, 34, 35, 36; 38).

5. The protection device according to claim 4, wherein the attachment elements (42) are electrically insulating.

6. The protection device according to claim 5, wherein the attachment elements (42) comprise an elastomeric material.

7. The protection device according to any one of the previous claims, wherein the electrodes (33, 34, 35, 36; 38) each comprise a lower portion (39) with a curved electrode segment, an upper portion (40) physically connected to the electrode mount (43), and a connecting portion (41) connecting the lower portion (39) and the upper portion (40).

8. The protection device according to any one of the previous claims, further comprising a deflection mechanism (60, 62, 63, 64) for deflecting the electrodes (33, 34, 35, 36) relative to the laser cutting head (10) by increasing or reducing an extension of the electrode device (31) around the fore part of the laser cutting head (10).

9. The protection device according to any one of the previous claims, wherein a number of the electrodes (33, 34, 35, 36; 38) is at least four.

10. A laser cutting head assembly of a laser cutting machine, the laser cutting head assembly comprising a laser cutting head (10) being equipped to move relative to a workpiece support while laser radiation is emitted towards a workpiece (12) supported by the workpiece support, the laser cutting head (10) extending between a rear part and a fore part, the laser cutting head assembly further comprising the protection device (30) according to any one of the previous claims mounted to the laser cutting head, with the electrode assembly (31) of the protection device (30) extending around a periphery of the fore part.

11. The laser cutting head assembly according to claim 10, wherein the fore part comprises a nozzle (25) equipped to emit at least one of the laser radiation and of a flow of an assist gas, wherein the electrode assembly (31) extends around a periphery of the nozzle (25).

12. A laser cutting machine (1), comprising the laser cutting head assembly according to claim 10 or 11, and a workpiece support and is equipped to move the laser cutting head (10) relative to the workpiece support while laser radiation is emitted towards a workpiece (12) supported by the workpiece support, the laser cutting machine (1) further comprising a machine control (20), wherein the detecting device (50) is in communicative connection with the machine control (20) and/or is at least partially integrated in the machine control (20), and wherein the machine control (20) is equipped and programmed to stop and/or deflect a movement of the laser cutting head (10) relative to the workpiece support once the detecting device (50) has detected that the electrode device (31) has collided with an object.

13. The laser cutting machine (1) according to claim 12, wherein the machine control (20) is equipped to deduct a location of the object from the information which one of the electrodes (33, 34, 35, 36; 38) of the electrode device (31) has collided with the object.

14. The laser cutting machine (1) according to claim 13, wherein the machine control (20) is equipped and programmed to prevent the laser cutting head (10) from moving to the location of the object until the object has been removed.
